# EUROPÄISCHE PATENTSCHRIFT

(11) **EP 4 140 868 B1**
(45) Veröffentlichungstag und Bekanntmachung des Hinweises auf die Patenterteilung: **21.05.2025**
(21) Anmeldenummer: 22188479.4
(22) Anmeldetag: 03.08.2022
(51) Int. Cl.: B60K 35/10, B60K 35/21, B62J 45/20, B62J 50/21, B62J 50/22, B62K 23/02

(54) **BEDIENVORRICHTUNG FÜR EIN EINSPURIGES FAHRZEUG**
OPERATIONAL DEVICE FOR A SINGLE-TRACK VEHICLE
DISPOSITIF DE COMMANDE POUR VÉHICULE À VOIE UNIQUE

(30) Priorität: 25.08.2021 DE 102021209293
(43) Veröffentlichungstag der Anmeldung: 01.03.2023
(73) Patentinhaber: Robert Bosch GmbH, 70442 Stuttgart (DE)
(72) Erfinder: Brumbach, Matthias, 70794 Filderstadt (DE)

(56) Entgegenhaltungen:
- EP-A1- 0 849 158
- EP-A2- 1 103 454
- EP-A2- 1 188 653
- EP-A2- 2 465 758
- US-B1- 10 189 535

## Beschreibung

### Stand der Technik

Die Erfindung betrifft eine Bedienvorrichtung für ein einspuriges Fahrzeug, insbesondere eine Mensch-Maschine-Schnittstelle eines Pedelec.

Die Erfindung betrifft weiter ein einspuriges Fahrzeug, insbesondere ein Fahrrad, mit einer an einer Komponente, insbesondere einer Lenkkomponente des Fahrzeugs, angeordneten Bedienvorrichtung.

Obwohl auf beliebige Bedienvorrichtungen von beliebigen einspurigen Fahrzeugen in Form von Motorrädern, eBikes, Pedelecs oder Fahrrädern ohne fahrerunterstützenden Antrieb anwendbar, wird die vorliegende Erfindung in Bezug auf eine Mensch-Maschine-Schnittstelle bei Pedelecs beschrieben.

Mensch-Maschine-Schnittschnitten bei Pedelecs werden zur Anzeige von Informationen und zur Steuerung von Funktionen des Pedelecs genutzt. So können beispielweise Informationen wie Fahrgeschwindigkeit, Unterstützungsstufe, Akkustand, gefahrene Kilometer oder dergleichen angezeigt werden. Diese Mensch-Maschine-Schnittstellen dienen nicht nur der Anzeige von Informationen, sondern ermöglichen auch die Steuerung des Pedelecs. So kann zum Beispiel die Unterstützungsstufe über Bedientasten verändert werden oder der Bildschirm bedient werden.

EP 0 849 158 A1 offenbart eine Bedienvorrichtung mit einem ersten (Bzz. 3), einem zweiten (Bzz. 2) und einem dritten Bedienbereich (Bzz. 4, 5) auf, wobei der erste Bedienbereich eine optische Anzeige aufweist, der zweite Bedienbereich einen Drehschalter 2 aufweist und der dritte Bedienbereich zwei Bedienelemente (4, 5) für eine Schaltung des Fahrzeugs aufweist. Die drei Bedienbereiche weisen bei Blickrichtung senkrecht zum ersten Bedienbereich (2) eine L-Form auf.

### Offenbarung der Erfindung

In einer Ausführungsform stellt die vorliegende Erfindung eine Bedienvorrichtung für ein einspuriges Fahrzeug, insbesondere eine Mensch-Maschine-Schnittstelle eines Pedelec, bereit, umfassend
einen ersten ebenen Bedienbereich, in dem eine optische Anzeigeeinrichtung angeordnet ist,
einen zweiten Bedienbereich, in dem eine optische Anzeigeeinrichtung und/oder zumindest eine Bedientaste angeordnet ist und der mit dem ersten Bedienbereich verbunden ist,
einen dritten Bedienbereich, in dem eine optische Anzeigeeinrichtung und/oder zumindest eine Bedientaste angeordnet ist und der mit dem zweiten Bedienbereich verbunden ist, wobei
erster und zweiter Bedienbereich zueinander einen ersten, nicht rechtwinkligen Winkel bilden und wobei
erster und dritter Bedienbereich zueinander einen zweiten nicht rechtwinkligen Winkel bilden und wobei die drei Bedienbereiche bei Blickrichtung senkrecht zum ersten Bedienbereich insgesamt eine L-Form bilden und der Winkel zwischen den Ebenen des ersten und zweiten Bedienbereichs zwischen 10 Grad und 45 Grad, insbesondere zwischen 20 Grad und 35 Grad, insbesondere zwischen 30 Grad und 35 Grad, ausgebildet ist.

In einer Ausführungsform stellt die vorliegende Erfindung ein einspuriges Fahrzeug, insbesondere ein Fahrrad, mit einer an einer Komponente, insbesondere einer Lenkkomponente des Fahrzeugs, angeordneten Bedienvorrichtung gemäß einem der Ansprüche 1-11 bereit.

Einer der damit erzielten Vorteile ist, dass damit eine einfache, schnelle und sichere Ablesbarkeit der optischen Anzeigeeinrichtung ermöglicht wird. Ein weiterer Vorteil ist, dass eine ergonomische und komfortable Erreichbarkeit von Bedientasten bereitgestellt wird. Ein weiterer Vorteil ist, dass ein hoher Wert für einen Nutzer - Nutzererlebnis - und Bedienkomfort erreicht wird.

Mit anderen Worten wird eine gute Ablesbarkeit für einen Nutzer und eine verbesserte Bedienung durch die unterschiedlich geneigten Bedienebenen und die L-Form der Bedienvorrichtung ermöglicht.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist zumindest eine der Bedientasten in zweitem und/oder dritten Bedienbereich als Wipptaste mit zwei Funktionen ausgebildet. Vorteil hiervon ist eine einfache, intuitive und schnelle Bedienung.

Gemäß einer weiteren vorteilhaften Weiterbildung der Erfindung weist, wenn eine Wipptaste in dem zweiten Bedienbereich angeordnet ist, diese eine Wipprichtung in Richtung der Verbindung zum ersten Bedienbereich auf. Damit kann intuitiv, wenn die Wipptaste für die Bedienung der optischen Anzeigeeinrichtung ausgebildet ist, die optische Anzeigeeinrichtung bedient werden.

Gemäß einer weiteren vorteilhaften Weiterbildung der Erfindung sind, wenn jeweils zumindest eine Wipptaste im zweiten und dritten Bedienbereich angeordnet ist, die Wipprichtungen senkrecht zueinander. Vorteil hiervon ist eine einfache Unterscheidbarkeit der Bedienung, sodass ein Fahrer des Fahrzeugs ohne Blickkontakt die beiden Wipptasten bedienen kann. So kann der Fahrer beispielsweise intuitiv eine jeweilige Fahrunterstützungsstufe hoch- und runterregeln mittels einer derartigen Wipptaste, die beispielsweise mit "+" und "-" beschriftet ist.

Gemäß einer weiteren vorteilhaften Weiterbildung der Erfindung ist, dass der zweite und dritte Bedienbereich eine unterschiedliche Anzahl von Bedientasten aufweisen.

Gemäß einer weiteren vorteilhaften Weiterbildung der Erfindung ist der Winkel zwischen den Ebenen des ersten und dritten Bedienbereichs zwischen 30 Grad und 60 Grad, insbesondere zwischen 35 Grad und 55 Grad, insbesondere zwischen 36 Grad und 52 Grad, ausgebildet. Vorteil hiervon ist eine schnelle und einfache Erreichbarkeit der Bedientasten im dritten Bedienbereich, beispielsweise mittels eines Daumens am Lenker eines Fahrrads.

Gemäß einer weiteren vorteilhaften Weiterbildung der Erfindung beträgt der Winkel zwischen den beiden Schenkeln der L-Form zwischen 85 Grad und 95 Grad, insbesondere zwischen 88 Grad und 92 Grad. Damit kann eine noch bessere intuitive Bedienbarkeit und Erreichbarkeit der Bedientasten, insbesondere im dritten Bedienbereich, ermöglicht werden.

Gemäß einer weiteren vorteilhaften Weiterbildung der Erfindung weist die optische Anzeigeeinrichtung ein Format von 2:1 auf. Vorteil hiervon ist eine verbesserte Darstellung von Informationen durch die optische Anzeigeeinrichtung ebenso wie eine größere Menge an gleichzeitig darstellbaren Informationen. Darüber hinaus ist eine verbesserte Anordnung vor dem Lenker beziehungsweise Integration in den Lenker möglich, da der Lenker ausreichend Platz entlang der Lenkerstange bereitstellt, jedoch wenig Platz in Fahrtrichtung.

Gemäß einer weiteren vorteilhaften Weiterbildung der Erfindung beträgt die Gesamtlänge von drittem Bedienbereich senkrecht zur Verbindungsrichtung von erstem und zweitem Bedienbereich zwischen 1,5 cm und 6 cm, vorzugsweise zwischen 2 cm und 5 cm. Damit wird eine gute Erreichbarkeit der Bedientasten im dritten Bedienbereich sichergestellt.

Gemäß einer weiteren vorteilhaften Weiterbildung der Erfindung ist eine Festlegungseinrichtung angeordnet zur Festlegung der Bedienvorrichtung an dem Fahrzeug. Damit kann die Bedienvorrichtung zuverlässig an einem Fahrzeug, beispielsweise lösbar, festgelegt werden.

Gemäß einer weiteren vorteilhaften Weiterbildung der Erfindung ist die Festlegungsvorrichtung derart mit der Bedienvorrichtung verbunden, dass bei Festlegung der Festlegungsvorrichtung an einer entsprechenden Komponente des Fahrzeugs, insbesondere einer Lenkerstange, der erste Bedienbereich gegenüber der Komponente einen Winkel zwischen 5 Grad und 25 Grad, insbesondere zwischen 10 Grad und 15 Grad, aufweist. Damit wird eine sehr gute Ablesbarkeit der optischen Anzeigeeinrichtung sichergestellt.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Fig. 1: eine Bedienvorrichtung gemäß einer Ausführungsform der vorliegenden Erfindung in der Draufsicht;
- Fig. 2: die Bedienvorrichtung gemäß Figur 1 in einer Seitenansicht
- Fig. 3: eine Bedienvorrichtung gemäß Figur 1 in einer weiteren Seitenansicht; und
- Fig. 4: ein Fahrzeug mit einer Bedienvorrichtung gemäß einer Ausführungsform der vorliegenden Erfindung.

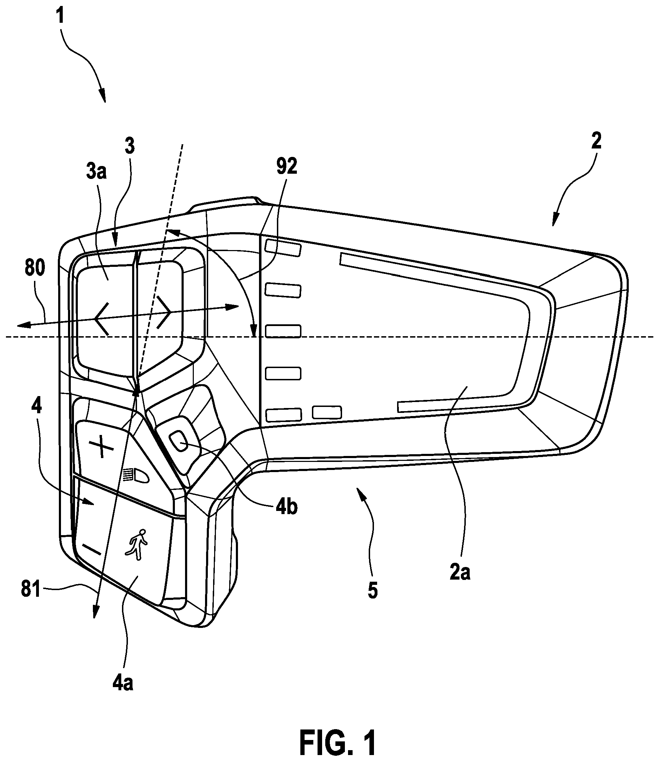

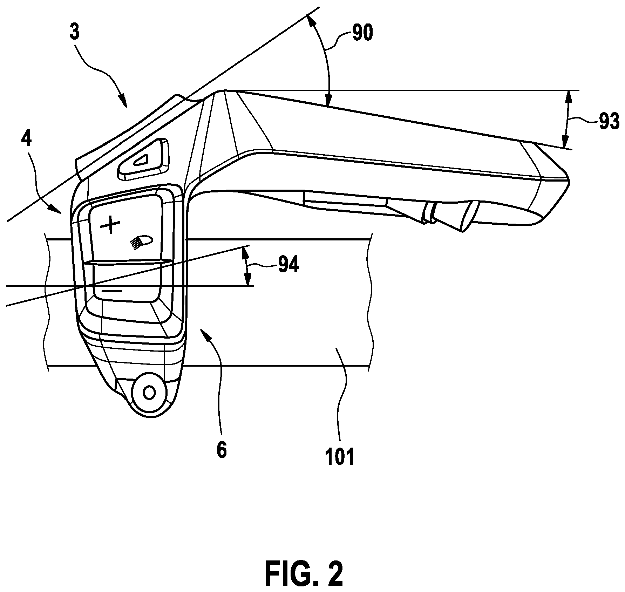

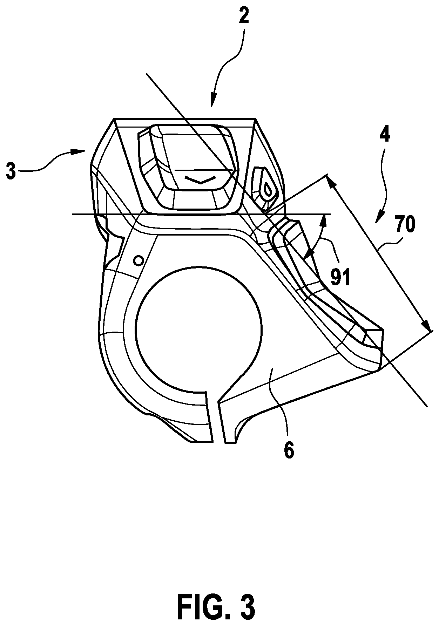

Figur 1 zeigt eine Bedienvorrichtung gemäß einer Ausführungsform der vorliegenden Erfindung in der Draufsicht, Figur 2 die Bedienvorrichtung gemäß Figur 1 in einer ersten Seitenansicht und Figur 3 die Bedienvorrichtung gemäß Figur 1 in einer weiteren Seitenansicht.

Figur 1 zeigt eine Bedienvorrichtung 1 für ein Fahrrad. Die Bedienvorrichtung 1 weist auf ihrer rechten Seite einen ersten im Wesentlichen rechteckförmigen Bedienbereich 2 auf, der eine Anzeigeeinrichtung 2a für Informationen des Fahrrads, beispielsweise die Geschwindigkeit oder dergleichen, aufweist. Die Anzeigeeinrichtung 2a und damit auch der erste Bedienbereich 2 weisen dabei ein Format von 2:1 auf. An der einen der beiden kürzeren Seiten des ersten Bedienbereichs 2 ist ein zweiter Bedienbereich 3 angeordnet, der mit einer Wipptaste 3a versehen ist. Diese weist eine Wipprichtung 80 in Richtung des ersten Bedienbereichs 2 auf. Hierbei weisen die Ebenen von zweitem Bedienbereich 3 und erstem Bedienbereich 2 einen Winkel 90 von 35 Grad auf.

Weiterhin ist in dem dritten Bedienbereich 4 eine Wipptaste 4a angeordnet, die eine Wipprichtung 81 aufweist in Richtung des zweiten Bedienbereichs 3. Die Wipprichtungen 80, 81 der beiden Wipptasten 3a, 4a sind somit gemäß Figur 1 im Wesentlichen senkrecht zueinander beziehungsweise weisen einen Winkel von weniger als 10 Grad, insbesondere von weniger als 5 Grad, zueinander auf. Darüber hinaus ist im dritten Bedienbereich 4 oberhalb der Wipptaste 4a eine weitere, insbesondere als Bestätigungstaste ausgebildete, Taste 4b angeordnet.

Insgesamt wird durch die gezeigte Anordnung in Figur 1 bei Draufsicht auf den ersten Bedienbereich eine L-Form 5 der Bedieneinrichtung gebildet, wobei der Winkel 92 der beiden Schenkel des "L", also einerseits des ersten Bedienbereichs 2, andererseits des zweiten und dritten Bedienbereichs 3, 4, bei circa 80 Grad gewählt wird, dieser kann jedoch insgesamt auch zwischen 75 Grad und 105 Grad gewählt werden.

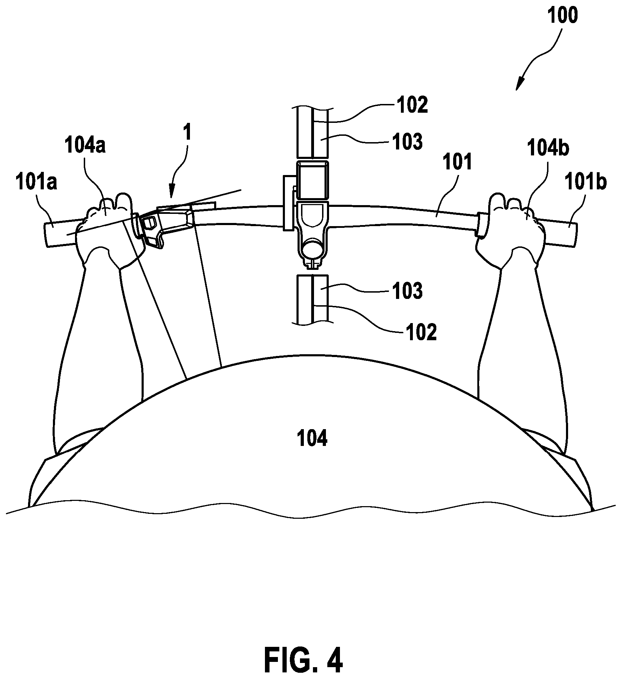

Figur 2 wie auch Figur 4 zeigen zusätzlich die Anordnung der Bedienvorrichtung 1 an einer Lenkstange 101 eines Fahrrads. Hierbei weist die Bedienvorrichtung 1 eine Festlegungseinrichtung 6 auf, die so ausgebildet ist, dass die Ebene der optischen Anzeigeeinrichtung 2a gegenüber der Erstreckung der Lenkstange um den Winkel 93, hier 10 Grad, in Richtung auf die Lenkstange 101 hin geneigt ist.

Figur 3 zeigt die Blickrichtung parallel zur Achse der Festlegungsvorrichtung 6, also in Bezug auf Figur 2 entlang der Lenkerstange 101, welche in Figur 3 nicht gezeigt ist. Zu sehen ist, dass der Winkel 91 zwischen dem ersten Bedienbereich 2 und dem dritten Bedienbereich 4 hier nahezu 50 Grad beträgt. Der Winkel 91 kann jedoch insgesamt auch zwischen 20 Grad und 60 Grad gewählt werden. Der dritte Bedienbereich 4 kann hierbei eine Erstreckung 70 zwischen 2 cm und 5 cm aufweisen.

Figur 4 zeigt ein Fahrzeug mit einer Bedienvorrichtung gemäß einer Ausführungsform der vorliegenden Erfindung.

In Figur 4 ist ein Fahrzeug 100 in Form eines Fahrrads gezeigt, genauer im Bereich eines Vorderrades 102, welches Schutzbleche 103 aufweist. Das Fahrrad 100 weist einen Lenker mit Lenkstange 101 auf, die von einem Fahrer 104 an deren beiden äußeren Griffen 101a mit dessen Händen 104a, 104b gehalten wird. Auf der linken Seite der Lenkstange 101 ist im Bereich der linken Hand 104a des Fahrers 104 eine Bedienvorrichtung 1 gemäß einer Ausführungsform der vorliegenden Erfindung angeordnet. Der Fahrer 104 kann nun die Bedienvorrichtung 1 mit seiner linken Hand 104a, insbesondere mit seinem linken Daumen, zumindest den dritten Bedienbereich 4 bedienen, ohne seine Hand von der Lenkstange 101 abnehmen zu müssen.

Bei den Ausführungsformen der vorliegenden Erfindung wird durch die Anordnung von Anzeige- und Tastenebenen in Form eines "L" und eine spezielle Winkelgebung für den Nutzer eine verbesserte Position sowohl für die Sichtbarkeit der Anzeige, als auch die ergonomische Bedienbarkeit der Tasten erreicht. Mit anderen Worten muss sich ein Nutzer nicht mehr zwischen guter Ablesbarkeit einerseits und ergonomischer Bedienbarkeit andererseits, sondern dem Nutzer wird durch die Form- und Winkelausbildung der Ausführungsform beides ermöglicht. Hierzu wird durch Neigung der optischen Anzeigeeinrichtung, insbesondere einer Bildschirmfläche, in die Blickrichtung des Nutzers, eine verbesserte Sichtbarkeit erreicht. Ein verbesserter Winkel für den einen typischen Abstand zwischen Auge eines Fahrers und Lenkerposition neben dem Griff bei bekannten Rahmen und Lenkern liegt bei ca. 10 Grad, der auch in Abhängigkeit des jeweiligen Fahrradtyps und Lenkerbreite um bis zu +/- 5 Grad angepasst werden kann.

Bei den Ausführungsformen der vorliegenden Erfindung sind die Ebenen der Bedientasten, damit die Bedientasten besser erreichbar sind, gegenüber der Anzeigefläche der optischen Anzeigeeinrichtung "nach unten gezogen". Die Länge für den Tastenschenkel hängt dabei insbesondere vom Lenkerabstand und der Tastenanzahl ab und kann zwischen 2 - 5 cm liegen, um eine Erreichbarkeit innerhalb einer Daumenrotationsbewegung des Fahrers zu ermöglichen. Dabei kann die Bedientastenebene abhängig vom Lenkerabstand zum Daumen ausgerichtet sein. Je größer der Abstand vom Lenkermittelpunkt ist, desto stärker ist die Neigung der Tastenebene nach links zum Daumen. Die Neigung liegt zwischen 10 Grad und 15 Grad, wobei die Tastenneigung mit kleinerem Lenkabstand kleiner gewählt wird.

Weiterhin werden die Bedientasten gegenüber der Anzeigeebene zum Fahrer nach unten rotiert mit dem Winkel 91, damit der Daumen zur Bedienung nicht so weit nach oben vorne gedreht werden muss. Die Rotation ist hierbei abhängig vom Lenkerabstand.

Zusammenfassend weist zumindest eine der Ausführungsformen der Erfindung zumindest einen der folgenden Vorteile und/oder zumindest eines der folgenden Merkmale auf:
- Ergonomische Bedienung und Ablesbarkeit.
- Hohes Nutzererlebnis.
- Erhöhter Komfort.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Bedienvorrichtung (1) für ein einspuriges Fahrzeug, insbesondere eine Mensch-Maschine-Schnittstelle eines Pedelec, umfassend
einen ersten ebenen Bedienbereich (2), in dem eine optische Anzeigeeinrichtung (2a) angeordnet ist,
einen zweiten Bedienbereich (3), in dem eine optische Anzeigeeinrichtung und/oder zumindest eine Bedientaste (3a) angeordnet ist und der mit dem ersten Bedienbereich (2) verbunden ist,
einen dritten Bedienbereich (4), in dem eine optische Anzeigeeinrichtung und/oder zumindest eine Bedientaste (4a) angeordnet ist und der mit dem zweiten Bedienbereich (3) verbunden ist, wobei
erster und zweiter Bedienbereich (2, 3) zueinander einen ersten, nicht rechtwinkligen Winkel (90) bilden und wobei
erster und dritter Bedienbereich (3, 4) zueinander einen zweiten nicht rechtwinkligen Winkel (91) bilden und wobei die drei Bedienbereiche (2, 3, 4) bei Blickrichtung senkrecht zum ersten Bedienbereich (2) insgesamt eine L-Form (5) bilden, **dadurch gekennzeichnet, dass** der Winkel (90) zwischen den Ebenen des ersten und zweiten Bedienbereichs (2, 3) zwischen 10 Grad und 45 Grad, insbesondere zwischen 20 Grad und 35 Grad, insbesondere zwischen 30 Grad und 35 Grad, ausgebildet ist.

2. Bedienvorrichtung gemäß Anspruch 1, wobei zumindest eine der Bedientasten (3a, 4a) in zweitem und/oder dritten Bedienbereich (3, 4) als Wipptaste mit zwei Funktionen ausgebildet ist.

3. Bedienvorrichtung gemäß einem der Ansprüche 1-2, wobei wenn eine Wipptaste (3a) in dem zweiten Bedienbereich (3) angeordnet ist, diese eine Wipprichtung (80) in Richtung der Verbindung zum ersten Bedienbereich (2) aufweist.

4. Bedienvorrichtung gemäß Anspruch 3, wobei wenn jeweils zumindest eine Wipptaste (3a, 4a) im zweiten und dritten Bedienbereich (3, 4) angeordnet ist, die Wipprichtungen (80, 81) senkrecht zueinander sind.

5. Bedienvorrichtung gemäß einem der Ansprüche 1-4, wobei der Winkel (91) zwischen den Ebenen des ersten und dritten Bedienbereichs (2, 4) zwischen 30 Grad und 60 Grad, insbesondere zwischen 35 Grad und 55 Grad, insbesondere zwischen 36 Grad und 52 Grad, ausgebildet ist.

6. Bedienvorrichtung gemäß einem der Ansprüche 1-5, wobei der Winkel (92) zwischen den beiden Schenkeln der L-Form (5) zwischen 85 Grad und 95 Grad, insbesondere zwischen 88 Grad und 92 Grad beträgt.

7. Bedienvorrichtung gemäß einem der Ansprüche 1-6, wobei eine optische Anzeigeeinrichtung (2a) ein Format von 2:1 aufweist.

8. Bedienvorrichtung gemäß einem der Ansprüche 1-7, wobei die Gesamtlänge (70) von dritten Bedienbereich (3, 4) senkrecht zur Verbindungsrichtung von erstem und zweitem Bedienbereich (2, 3) zwischen 1,5 cm und 6 cm, vorzugsweise zwischen 2 cm und 5 cm beträgt.

9. Bedienvorrichtung gemäß einem der Ansprüche 1-8, wobei eine Festlegungseinrichtung (6) angeordnet ist, zur Festlegung der Bedienvorrichtung (1) an dem Fahrzeug.

10. Bedienvorrichtung gemäß Anspruch 9, wobei die Festlegungsvorrichtung (6) mit der Bedienvorrichtung (1) derart verbunden ist, dass bei Festlegung der Festlegungseinrichtung (6) an einer entsprechenden Komponente (101) des Fahrzeugs (100), insbesondere einer Lenkerstange, der erste Bedienbereich (2) gegenüber der Komponente (101) einen Winkel (93) zwischen 5 Grad und 25 Grad, insbesondere zwischen 10 Grad und 15 Grad, aufweist.

11. Bedienvorrichtung gemäß einem der Ansprüche 1-10, wobei der zweite und dritte Bedienbereich (3, 4) eine unterschiedliche Anzahl von Bedientasten (3a, 4a) aufweisen.

12. Einspuriges Fahrzeug (100), insbesondere ein Fahrrad, mit einer an einer Komponente, insbesondere einer Lenkkomponente (101), des Fahrzeugs (100) angeordneten Bedienvorrichtung (1) gemäß einem der Ansprüche 1-11.

## Claims

1. Operating device (1) for a single-track vehicle, in particular a man-machine interface of a pedelec, comprising
a first planar operating region (2), in which an optical display device (2a) is arranged,
a second operating region (3), in which an optical display device and / or at least one operating button (3a) are / is arranged and which is connected to the first operating region (2),
a third operating region (4), in which an optical display device and / or at least one operating button (4a) are / is arranged and which is connected to the second operating region (3), wherein
the first and second operating regions (2, 3) form a first angle (90) with respect to each other which is not a right angle, and wherein
the first and third operating regions (3, 4) form a second angle (91) with respect to each other which is not a right angle, and wherein the three operating regions (2, 3, 4) form an L-shape (5) when viewed perpendicularly with respect to the first operating region (2), **characterized in that** the angle (90) between the planes of the first and second operating region (2, 3) is configured to be between 10 degrees and 45 degrees, in particular between 20 degrees and 35 degrees, in particular between 30 degrees and 35 degrees.

2. Operating device according to Claim 1, wherein at least one of the operating buttons (3a, 4a) in the second and / or third operating region (3, 4) is configured as a rocker button with two functions.

3. Operating device according to either of Claims 1-2, wherein, when a rocker button (3a) is arranged in the second operating region (3), it has a rocking direction (80) in the direction of the connection to the first operating region (2).

4. Operating device according to Claim 3, wherein, when at least one rocker button (3a, 4a) is arranged in the second and third operating region (3, 4), the rocking directions (80, 81) are perpendicular with respect to each other.

5. Operating device according to one of Claims 1-4, wherein the angle (91) between the planes of the first and third operating region (2, 4) is configured to be between 30 degrees and 60 degrees, in particular between 35 degrees and 55 degrees, in particular between 36 degrees and 52 degrees.

6. Operating device according to one of Claims 1-5, wherein the angle (92) between the two legs of the L-shape (5) is between 85 degrees and 95 degrees, in particular between 88 degrees and 92 degrees.

7. Operating device according to one of Claims 1-6, wherein an optical display device (2a) has a format of 2:1.

8. Operating device according to one of Claims 1-7, wherein the total length (70) of the third operating region (3, 4) perpendicularly with respect to the connection direction of the first and second operating region (2, 3) is between 1.5 cm and 6 cm, preferably between 2 cm and 5 cm.

9. Operating device according to one of Claims 1-8, wherein a fixing device (6) is arranged, for fixing the operating device (1) on the vehicle.

10. Operating device according to Claim 9, wherein the fixing device (6) is connected to the operating device (1) in such a way that, when the fixing device (6) is fixed on a corresponding component (101) of the vehicle (100), in particular a handlebar, the first operating region (2) has an angle (93) with respect to the component (101) of between 5 degrees and 25 degrees, in particular between 10 degrees and 15 degrees.

11. Operating device according to one of Claims 1-10, wherein the second and third operating region (3, 4) have a different number of operating buttons (3a, 4a).

12. Single-track vehicle (100), in particular a bicycle, having an operating device (1) according to any one of Claims 1-11 arranged on a component, in particular a steering component (101), of the vehicle (100).

## Revendications

1. Dispositif de commande (1) pour un véhicule à voie unique, en particulier une interface homme-machine d'un vélo électrique, comprenant
une première zone de commande plane (2) dans laquelle est agencé un dispositif d'affichage optique (2a),
une deuxième zone de commande (3) dans laquelle sont agencés un dispositif d'affichage optique et/ou au moins une touche de commande (3a) et qui est reliée à la première zone de commande (2),
une troisième zone de commande (4) dans laquelle sont agencés un dispositif d'affichage optique et/ou au moins une touche de commande (4a) et qui est reliée à la deuxième zone de commande (3),
les première et deuxième zones de commande (2, 3) forment entre elles un premier angle non droit (90), et
les première et troisième zones de commande (3, 4) forment entre elles un deuxième angle non droit (91) et les trois zones de commande (2, 3, 4) forment globalement une forme en L (5) lorsqu'elles sont vues perpendiculairement à la première zone de commande (2), **caractérisé en ce que** l'angle (90) entre les plans des première et deuxième zones de commande (2, 3) est compris entre 10 degrés et 45 degrés, en particulier entre 20 degrés et 35 degrés, en particulier entre 30 degrés et 35 degrés.

2. Dispositif de commande selon la revendication 1, dans lequel au moins une des touches de commande (3a, 4a) dans la deuxième et/ou la troisième zone de commande (3, 4) est conçue sous la forme d'une touche à bascule à deux fonctions.

3. Dispositif de commande selon l'une des revendications 1 à 2, dans lequel, lorsqu'une touche à bascule (3a) est agencée dans la deuxième zone de commande (3), celle-ci présente une direction de basculement (80) dans la direction du raccordement à la première zone de commande (2).

4. Dispositif de commande selon la revendication 3, dans lequel, lorsqu'au moins une touche à bascule (3a, 4a) est agencée dans les deuxième et troisième zones de commande (3, 4), les directions de basculement (80, 81) sont perpendiculaires l'une à l'autre.

5. Dispositif de commande selon l'une des revendications 1 à 4, dans lequel l'angle (91) entre les plans de la première et de la troisième zone de commande (2, 4) est compris entre 30 degrés et 60 degrés, en particulier entre 35 degrés et 55 degrés, en particulier entre 36 degrés et 52 degrés.

6. Dispositif de commande selon l'une des revendications 1 à 5, dans lequel l'angle (92) entre les deux branches de la forme en L (5) est compris entre 85 degrés et 95 degrés, en particulier entre 88 degrés et 92 degrés.

7. Dispositif de commande selon l'une des revendications 1 à 6, dans lequel un dispositif d'affichage optique (2a) présente un format de 2:1.

8. Dispositif de commande selon l'une des revendications 1 à 7, dans lequel la longueur totale (70) de la troisième zone de commande (3, 4) perpendiculaire à la direction de raccordement de la première et de la deuxième zone de commande (2, 3) est comprise entre 1,5cm et 6cm, de préférence entre 2cm et 5cm.

9. Dispositif de commande selon l'une des revendications 1 à 8, dans lequel un dispositif de fixation (6) est prévu pour fixer le dispositif de commande (1) sur le véhicule.

10. Dispositif de commande selon la revendication 9, dans lequel le dispositif de fixation (6) est relié au dispositif de commande (1) de telle sorte que, lorsque le dispositif de fixation (6) est fixé à un composant correspondant (101) du véhicule (100), en particulier à une tige de guidon, la première zone de commande (2) forme un angle (93) compris entre 5 degrés et 25 degrés, en particulier entre 10 degrés et 15 degrés, par rapport au composant (101).

11. Dispositif de commande selon l'une des revendications 1 à 10, dans lequel la deuxième et la troisième zone de commande (3, 4) comprennent un nombre différent de touches de commande (3a, 4a).

12. Véhicule à voie unique (100), en particulier un vélo, avec un dispositif de commande (1) agencé sur un composant, en particulier un composant de direction (101), du véhicule (100) selon l'une des revendications 1 à 11.
